# EUROPÄISCHE PATENTSCHRIFT

(11) **EP 2 434 422 B1**
(45) Veröffentlichungstag und Bekanntmachung des Hinweises auf die Patenterteilung: **31.12.2014**
(21) Anmeldenummer: 11177810.6
(22) Anmeldetag: 17.08.2011
(51) Int. Cl.: G06F 21/57, G06F 21/62, G06F 21/80

(54) **Verfahren zum sicheren Löschen von Daten, Firmwarekomponente und Verwendung einer Firmwarekomponente**
Method for secure deletion of data, firmware component and use of a firmware component
Procédé d'extinction sûre de données, composants micrologiciels et utilisation d'un composant micrologiciel

(30) Priorität: 23.09.2010 DE 102010046405
(43) Veröffentlichungstag der Anmeldung: 28.03.2012
(73) Patentinhaber: Fujitsu Technology Solutions Intellectual Property GmbH, 80807 München (DE)
(72) Erfinder: Höhnke, Thorsten, 86343 Königsbrunn (DE); Tippach, Michael, 86179 Augsburg (DE)
(74) Vertreter: Epping - Hermann - Fischer

(56) Entgegenhaltungen:
- EP-A1- 1 491 981
- US-A1- 2005 289 289
- "EDKII User Manual", , 8. Juni 2008 (2008-06-08), XP55013435, Gefunden im Internet: URL:http://ignum.dl.sourceforge.net/projec t/edk2/General Documentation/EDKII User Manual V0.60.pdf [gefunden am 2011-11-29]

## Beschreibung

Die vorliegende Erfindung betrifft ein Verfahren zum sicheren Löschen von Daten von einem Computersystem mit wenigstens einem Massenspeichersystem. Darüber hinaus betrifft die vorliegende Erfindung eine Firmwarekomponente für ein Computersystem sowie die Verwendung der Firmwarekomponente.

Verfahren und Programme zum sicheren Löschen von Daten eines Computersystems mit wenigstens einem Massenspeichersystem sind vielfach bekannt. Beispielsweise sind Dienstprogramme für verschiedene Betriebssysteme bekannt, mit deren Hilfe einzelne Dateien oder gesamte Partitionen eines Festplattenlaufwerks mit einem vorbestimmten Muster überschrieben werden können, um eine spätere Wiederherstellung der gelöschten Dateien bzw. Partitionen zu verhindern. Solche Programme kommen insbesondere dann zum Einsatz, wenn ein Nutzer eines Computersystems auf einem Massenspeichersystem gespeicherten Daten löschen möchte, um das Computersystem zu veräußern.

Sollen nur einzelne Dateien, wie beispielsweise Dokumente mit vertraulichen persönlichen oder finanziellen Daten, gelöscht werden, ist die Anwendung entsprechender Dienstprogramme verhältnismäßig einfach. Beispielsweise können Programme zum sicheren Löschen von einzelnen Dateien in einen Dateimanager eines Betriebssystems integriert werden.

Aufgrund der Architektur und Arbeitsweise moderner Betriebssysteme reicht eine solche Löschung von einzelnen Dateien in der Regel jedoch nicht aus, um ein Computersystem sicher für einen Wiederverkauf zu machen. Dies liegt zum einen daran, dass nicht nur vertrauliche Dateien selbst, sondern auch durch entsprechende Softwarelizenzen geschützte Computerprogramme von dem Massenspeichersystem entfernt werden müssen. Darüber hinaus werden Inhalte einzelner Dateien oft in Systemeinstellungen oder Systemdateien ganz oder teilweise zwischengespeichert. Beispielsweise enthält die so genannte Auslagerungsdatei, durch die virtueller Arbeitsspeicher des Computersystems auf ein Massenspeichersystem abgebildet wird, Teile des Arbeitsspeicherinhalts des Computersystems. Solche und ähnliche Systemdateien können in der Regel nicht während des Betriebs des Betriebssystems selbst gelöscht werden.

Um bei bekannten Computersystemen dennoch eine sichere Löschung des gesamten Massenspeichersystems durchzuführen, hat sich folgender Verfahrensablauf etabliert. Zunächst wird das Computersystem mit einem so genannten Hilfsbetriebssystem, beispielsweise einer einfachen DOS-Umgebung oder einer bootfähigen LINUX-Umgebung, von einem externen Speichermedium, insbesondere einer Diskette oder einer CD-ROM, gestartet. Sodann wird in dem Hilfsbetriebssystem ein Dienstprogramm zum Löschen von Daten gestartet. In dem Hilfsprogramm kann dann in der Regel ausgewählt werden, welche Dateien oder Partitionen eines Massenspeichersystems des Computersystems gelöscht werden sollen.

Eine solche Vorgehensweise ist für einen ungeschulten Nutzer des Computersystems verhältnismäßig aufwändig und schwierig. Oft muss zunächst ein bootfähiges Medium erstellt werden, mit dessen Hilfe das Computersystem gestartet werden kann. Des Weiteren muss das Computersystem in der Regel umkonfiguriert werden, um ein Starten des Computersystems von einem externen Speichermedium zuzulassen. Schließlich muss der Benutzer gegebenenfalls gesonderte Software erwerben, die ein sicheres Löschen des Massenspeichersystems gestattet. Wegen der großen Komplexität werden daher manchmal nicht alle Dateien oder Partitionen gelöscht, so dass im Einzelfall doch noch vertrauliche Daten auf dem Computersystem verbleiben.

Aus der US 2005/0289289 A1 ist eine Software zum Löschen eines nichtflüchtigen Speichergerätes bekannt. Das darin beschriebene System umfasst einen Prozessor, ein nichtflüchtiges Speichergerät, das mit dem Prozessor gekoppelt ist, einen Nurlesespeicher (ROM), der mit dem Prozessor und dem nichtflüchtigen Speichergerät gekoppelt ist, und eine in dem ROM gespeicherte Software. Die Software wird durch den Prozessor ausgeführt und ist dazu eingerichtet, das nichtflüchtige Speichergerät durch Überschreiben im Wesentlichen aller adressierbaren Speicherpositionen des nichtflüchtigen Speichergerätes zu löschen, während eine Bootfirmware das System steuert.

Aus der EP 1 491 981 A1 ist ein informationsverarbeitendes Gerät bekannt, welches ein Speichergerät zum Speichern eines Betriebsystems und von Benutzerdaten aufweist. Das informationsverarbeitende Gerät weist weiterhin einen Speicher auf, welcher zum Speichern einer Mehrzahl von Funktionen, einschließlich einer Löschfunktion zum Löschen von Speicherinhalt in dem Speichergerät, eingerichtet ist. Weiter weist das informationsverarbeitende Gerät eine Einheit auf, die dazu eingerichtet ist, die Löschfunktion in einem Zustand zu aktivieren, in welchem das Betriebssystem nicht ausgeführt wird.

Der vorliegenden Erfindung liegt die Aufgabe zugrunde, ein für den Benutzer besonders einfach durchzuführendes Verfahren zum sicheren Löschen von Daten von einem Computersystem mit wenigstens einem Massenspeichersystem anzugeben. Darüber hinaus sollen Vorrichtungen angegeben werden, die eine einfache Ausführung eines solchen Verfahrens gestatten.

Die Aufgabe wird durch ein verfahren zum sicheren Löschen von Daten von einem Computersystem mit wenigstens einem Massenspeichersystem gelöst, das die folgenden Schritte umfasst:
- Anfordern der Löschung und Festlegen eines vorbestimmten Teils des Massenspeichersystems durch ein Dienstprogramm, das innerhalb eines Betriebssystems des computer-systems ausgeführt wird,
- Übermitteln der Anforderung der Löschung und des festgelegten Teils über eine Firmwareschnittstelle an eine Firmwarekomponente,
- Neustart des Computersystems zum Ausführen einer Systemfirmware,
- Ausführen der Systemfirmware des Computersystems,
- Laden der Firmwarekomponente mit Programmcode zum sicheren Löschen von Daten durch die Systemfirmware und
- Löschen des über die Firmwareschnittstelle übermittelten Teils des Massenspeichersystems durch Ausführen des Programmcodes innerhalb der Systemfirmware unabhängig von dem Betriebssystem des Computersystems.

Gemäß dem vorgeschlagenen Verfahren wird eine Firmwarekomponente mit Programmcode zum sicheren Löschen von Daten in eine Systemfirmware integriert. Somit steht eine Funktion zum sicheren Löschen des Massenspeichersystems unmittelbar beim Booten des Computersystems und unabhängig von einem Betriebssystem des Computersystems zur Verfügung. Durch die Integration erübrigt sich der Einsatz eines Hilfsbetriebssystems zum Booten des Computersystems. Zugleich können sämtliche Daten des Massenspeichersystems, insbesondere auch durch das Betriebssystem selbst geschützte Daten wie etwa Auslagerungsdateien, durch die Firmwarekomponente gelöscht werden.

Das Problem wird ebenso gelöst durch eine Firmwarekomponente für ein Computersystem, wobei das Computersystem ein Massenspeichersystem sowie wenigstens einen nicht flüchtigen Speicher zum Speichern einer beim Start des Computersystems auszuführenden Systemfirmware aufweist. Die Firmwarekomponente ist dadurch gekennzeichnet, dass sie Programmcode enthält, der dazu eingerichtet ist, beim Ausführen des Programmcodes auf dem Computersystem einen zu löschenden Teil des Massenspeichersystems unabhängig von einem Betriebssystem des Computersystems zu löschen, wobei die Systemfirmware und/oder die Firmwarekomponente eine Firmwareschnittstelle zum Festlegen des zu löschenden Teils des Massenspeichersystems durch ein Dienstprogramm, das innerhalb des Betriebssystems des Computersystems ausgeführt wird, bereitstellt.

über eine solche Schnittstelle kann die Firmwarekomponente verhältnismäßig komfortabel durch ein Dienstprogramm, das beispielsweise innerhalb eines Betriebssystems abläuft, angesteuert werden. Zum Beispiel ist es möglich, im Betrieb des Computersystems durch ein Dienstprogramm die Auslagerungsdatei zum Löschen auszuwählen. Diese Aktion wird dann jedoch nicht gleich, sondern erst beim nächsten Start des Computersystems mit nachfolgender Ausführung der Firmwarekomponente durchgeführt.

Gemäß einer vorteilhaften Ausgestaltung ist die Firmwarekomponente als plattformintegriertes Firmwaremodul in die Systemfirmware integriert. Insbesondere handelt es sich um eine so genannte UEFI (Universal Extensible Firmware Interface) Shell-Anwendung oder um einen UEFI-Treiber, der in eine Systemfirmware gemäß dem UEFI-Standard integriert ist. Die Integration der Firmwarekomponente als plattformintegriertes Firmwaremodul erlaubt die Integration einer derartigen Löschfunktion in die Systemfirmware unterschiedlicher Hersteller und für unterschiedliche Hardwarekomponenten.

Gemäß einer vorteilhaften Ausgestaltung ist der Programmcode dazu eingerichtet, den Inhalt des gesamten Massenspeichersystems auf Aufforderung eines Benutzers des Computersystems zu löschen. Das Löschen des gesamten Inhalts des Massenspeichersystems besitzt den Vorteil, dass nicht versehentlich vertrauliche Daten auf dem Massenspeichersystem verbleiben. Insbesondere kann bei einem Löschen des gesamten Massenspeichersystems unabhängig von darauf eventuell bestehenden, aber versteckten Partitionen sichergestellt werden, dass auch in den versteckten Partitionen enthaltene Anwenderdaten oder Daten eines Betriebssystems gelöscht werden.

Gemäß einer weiteren vorteilhaften Ausgestaltung ist der Programmcode zum Festlegen des zu löschenden Teils des Massenspeichersystems durch eine Benutzerschnittstelle eingerichtet. Durch das Vorsehen einer Benutzerschnittstelle kann bei Bedarf durch den Benutzer ausgewählt werden, ob sämtliche Daten oder nur ein Teil des Massenspeichersystems gelöscht werden soll. Dies bietet sich insbesondere dann an, wenn nur eines einer Mehrzahl von Betriebssystemen oder nur die Anwenderdaten einer erweiterten Partition des Computersystems gelöscht werden sollen.

Weitere vorteilhafte Ausgestaltungen der vorliegenden Erfindung sind in den abhängigen Patentansprüchen sowie der nachfolgenden, ausführlichen Beschreibung angegeben.

Die Erfindung wird nachfolgend anhand unterschiedlicher Ausführungsbeispiele unter Bezugnahme auf Figuren näher beschrieben. In den Figuren zeigen:
- Figur 1: eine schematische Darstellung einer Softwarearchitektur, umfassend eine Firmwarekomponente, und
- Figur 2: ein Ablaufdiagramm eines Verfahrens zum sicheren Löschen von Daten.

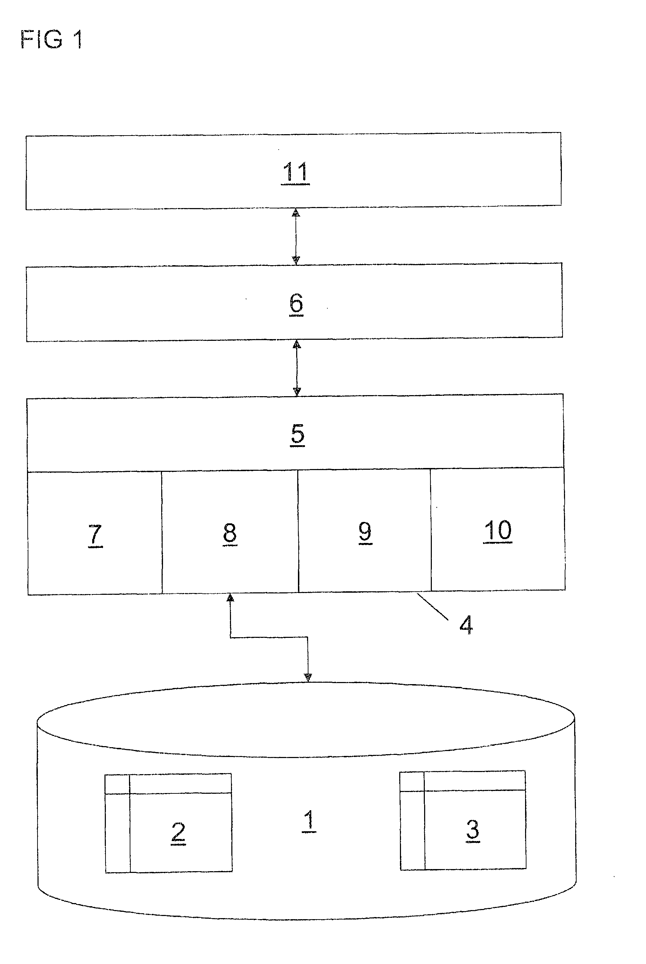

Figur 1 zeigt eine schematische Darstellung einer Softwarearchitektur für ein Computersystem mit wenigstens einem Massenspeichersystem 1. Das Massenspeichersystem 1 enthält im Ausführungsbeispiel eine Systempartition 2 mit Daten eines Betriebssystems sowie eine Datenpartition 3 mit Programmen und Daten eines Anwenders. Selbstverständlich können sich Betriebssystemdaten und Anwenderdaten auch in derselben Partition oder verteilt über weitere Partitionen eines Massenspeichersystems 1 befinden.

Das Computersystem umfasst eine Systemfirmware 4, die im Ausführungsbeispiel modular aufgebaut ist. Neben einer allgemeinen Firmwareschnittstelle 5, die unter anderem zum Zugriff eines auf dem Computersystem ausgeführten Betriebssystems 6 auf einzelne Dienste der Systemfirmware 4 dient, umfasst es mehrere Firmwarekomponenten 7, 8, 9 und 10.

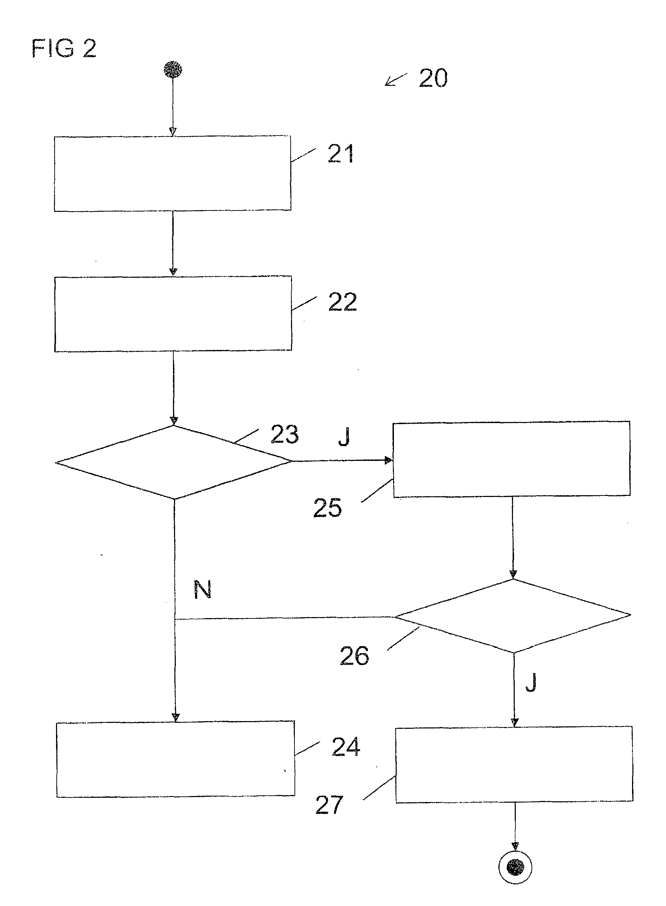

Beispielsweise handelt es sich bei der ersten Firmwarekomponente 7 um einen so genannten Boot-Loader, der beim Start des Computersystems als erstes ausgeführt wird und nachfolgend gegebenenfalls weitere Firmwarekomponenten 8 bis 10 lädt und ausführt. Bei der zweiten Firmwarekomponente 8 handelt es sich beispielsweise um ein Treibermodul zum Ansteuern von Hardwareressourcen des Computersystems. Beispielsweise handelt es sich bei der zweiten Firmwarekomponente 8 um ein Treibermodul zum Ansteuern des Massenspeichersystems 1. Bei der dritten Firmwarekomponente 9 handelt es sich um eine Firmwarekomponente mit Programmcode zum sicheren Löschen von Daten des Massenspeichersystems 1 in Form einer so genannten UEFI-Shell-Anwendung. Die dritte Firmwarekomponente 9 wird später unter Bezugnahme auf die Figur 2 näher beschrieben. Bei der vierten Firmwarekomponente 10 handelt es sich beispielsweise um Programmcode zum Darstellen und Ausführen einer Benutzerschnittstelle für andere Firmwarekomponenten der Systemfirmware 4. Im Ausführungsbeispiel dient die vierte Firmwarekomponente 10 auch zur Ansteuerung der Shell-Anwendung der dritten Firmwarekomponente 9.

Zusätzlich oder alternativ kann die dritte Firmwarekomponente 9 auch durch ein Dienstprogramm 11, das innerhalb des Betriebssystems 6 ausgeführt wird, angesteuert werden. Beispielsweise kann durch das Dienstprogramm 11 eine Datei oder Partition zur Löschung durch die dritte Firmwarekomponente 9 ausgewählt werden. Das Dienstprogramm 11 oder das Betriebssystem 6 ermittelt dann eine physikalische Speicheradresse der ausgewählten Datei oder Partition auf dem Massenspeichersystem 1 und speichert diese Adresse in einem Speicher des Computersystems, auf den die Systemfirmware 4 Zugriff hat, ab. Beispielsweise kann die Adresse in einem geschützten Teil der Festplatte, einen nichtflüchtigen Speicherbaustein, in dem Einstellungen der Systemfirmware 4 gespeichert sind, oder auch in einem geschützten Teil des flüchtigen Hauptspeichers des Computersystems zwischengespeichert werden, sofern dieser bei einem Neustart des Computersystem nicht vollständig gelöscht wird. Bei einem nachfolgenden Start der Systemfirmware 4 wird dann die Firmwarekomponente 9 ausgeführt und, basierend auf den Adressangaben in dem Speicher, die ausgewählte Datei schon vor dem Start des Betriebssystems 6 gelöscht. Figur 2 zeigt eine schematische Darstellung eines Verfahrens 20 zum Löschen von Daten eines Massenspeichersystems 1.

In einem ersten Schritt 21 wird das Computersystem initialisiert. Insbesondere wird eine Versorgungsspannung an sämtliche zum Betrieb erforderlichen Hardwarekomponenten des Computersystems angelegt, sodass beispielsweise das Massenspeichersystem 1 startet und ein Prozessor beginnt, an einer vorbestimmten Adresse gespeicherten Programmcode auszuführen.

In einem nachfolgenden Schritt 22 wird ein für den Start des Computersystems unerlässlicher Teil der Systemfirmware 4 geladen und ausgeführt. Beispielsweise wird der so genannte Boot-Loader der ersten Firmwarekomponente 7 durch den Prozessor geladen und nachfolgend ausgeführt. In diesem Schritt können bei Bedarf auch weitere Firmwarekomponenten, insbesondere die zweite Firmwarekomponente 8 mit einem Hardwaretreiber geladen und ganz- oder teilweise ausgeführt werden.

In einem Schritt 23 wird überprüft, ob die dritte Firmwarekomponente 9 zum sicheren Löschen von Daten aktiviert werden soll. Beispielsweise kann im Schritt 23 überprüft werden, ob ein Benutzer als Reaktion auf eine Ausgabe einer entsprechenden Meldung auf einem Bildschirm des Computersystems eine vorbestimmte Taste gedrückt hat. Alternativ kann eine solche Funktion auch interaktiv aktiviert werden, wenn der Benutzer beispielsweise schon eine Benutzeroberfläche der vierten Firmwarekomponente 10 der Systemfirmware 4 aufgerufen hat und über die Benutzeroberfläche manuell die Ausführung der dritten Firmwarekomponente 9 anfordert. Des Weiteren ist auch eine automatische Ausführung der Firmwarekomponente 9 möglich, wenn durch ein Dienstprogramm 11 zuvor eine entsprechende Anweisung vor dem Neustart des Computersystems gespeichert wurde.

Soll der Programmcode der dritten Firmwarekomponente 9 nicht ausgeführt werden, wird in einem nachfolgenden Schritt 24 das Betriebssystem 6 wie gewohnt in den Hauptspeicher des Computersystems geladen und gestartet.

Soll statt dessen die dritte Firmwarekomponente 9 ausgeführt werden, wird der darin enthaltene Programmcode in einem Schritt 25 geladen und ausgeführt. Während der Ausführung der dritten Firmwarekomponente 9 kann auch festgelegt werden, welcher Teil des Massenspeichersystems 1 gelöscht werden soll.

Gemäß einer einfachen Ausgestaltung sucht die dritte Firmwarekomponente 9 sämtliche Massenspeichersysteme 1 des Computersystems und wählt diese zur Löschung aus. Beispielsweise kann die Firmwarekomponente 9 automatisch alle Festplatten eines Computersystems über geeignete Treiber der zweiten Firmwarekomponente 8 finden und auswählen. Dabei erfolgt eine Löschung unabhängig von einer eventuellen Partitionierung des oder der Massenspeichersysteme 1, das heißt, es werden alle Speichersektoren und/oder -blöcke des Massenspeichersystems 1 zur Löschung ausgewählt.

Gemäß einer alternativen Ausgestaltung kann die Auswahl statt dessen manuell durch einen Benutzer, beispielsweise unter Verwendung der Benutzeroberfläche der dritten Firmwarekomponente 10, vorgenommen werden. Dabei kann die Auswahl entweder durch den lokalen Benutzer des Computersystems oder über eine so genannte Fernwartungsfunktion von einem Administrator eines Netzwerks, in das das Computersystem integriert ist, vorgenommen werden. Weiterhin kann, wie oben beschrieben, eine Auswahl auch vorab über ein Dienstprogramm 11, das unter dem Betriebssystem 6 abläuft, vorgenommen werden.

In einem optionalen Schritt 26 wird dem Benutzer des Computersystems eine Sicherheitsabfrage angezeigt. Durch das Anzeigen der Sicherheitsabfrage soll vermieden werden, dass der Benutzer versehentlich sämtliche Programme und Daten des Computersystems löscht. Bricht der Benutzer an dieser Stelle ab, wird das Betriebssystem 6 wieder wie gewöhnlich in Schritt 24 ausgeführt.

Bestätigt der Benutzer in Schritt 26 dagegen die Sicherheitsabfrage, werden in einem nachfolgenden Schritt 27 das gesamte Massenspeichersystem 1 oder die ausgewählten Teile des Massenspeichersystems 1 des Computersystems gelöscht. Sofern in Schritt 27 das gesamte Massenspeichersystem gelöscht wird, ist ein nachfolgendes Ausführen des Betriebssystems 24 nicht mehr möglich. Das Computersystem bleibt also so lange unbrauchbar, bis ein neues Betriebssystem auf ihm installiert wird. Dieser Zustand eignet sich insbesondere für einen Verkauf oder eine sonstige Weitergabe des Computersystems.

Zum Löschen des Massenspeichersystems 1 in Schritt 27 können unterschiedliche Verfahren eingesetzt werden. In einem einfachen Ausführungsbeispiel wird lediglich die so genannte Partitionstabelle eines Festplattenspeicherlaufwerks gelöscht, sodass ein nachfolgendes Booten von dem Massenspeichersystem nicht mehr möglich ist. Ein solcher Ansatz hat jedoch den Nachteil, dass mit geeigneten Tools die vermeintlich gelöschten Daten wiederhergestellt werden können.

Aus dem Bereich der Datensicherheit sind weitere sichere Löschverfahren bekannt, die nicht nur Metadaten löschen, wie beispielsweise die Partitionstabelle oder Eintragungen des Dateisystems eines Massenspeichersystems 1, sondern die Daten selbst in einem oder mehreren Durchläufen mit vorbestimmten Mustern überschreiben. Beispiele solcher Verfahren sind das ein- oder mehrfache Überschreiben mit vorgegebenen Mustern, wie beispielsweise Nullen oder Einsen, oder auch standardisierte Verfahren gemäß vorgegebenen Sicherheitsrichtlinien wie beispielsweise DOD-5220.22-M ECE des US-amerikanischen Verteidigungsministeriums, BSI/VSITR der Bundesamts für Sicherheit in der Informationstechnik oder der so genannte Peter-Gutmann-Algorithmus. Selbstverständlich ist die beschriebene Firmwarekomponente 9 bzw. das offenbarte Verfahren 20 nicht auf solche Löschalgorithmen beschränkt, sondern kann in Verbindung mit jedem geeigneten Löschverfahren eingesetzt werden.

Das beschriebene Verfahren stellt dem Benutzer eine einfache und wirksame Methode zur Verfügung, auf einem Massenspeichersystem 1 eines Computersystem gespeicherten Daten unabhängig von der Funktion eines Betriebsystems 6 zuverlässig zu löschen. Dabei ist es nicht erforderlich, ein zusätzliches Bootmedium zum Starten eines Hilfsbetriebssystems zu erstellen. Des Weiteren muss der Benutzer auch keine zusätzliche Software zum Durchführen der Löschung erwerben. Die Funktion steht selbst dann noch zur Verfügung, wenn ein Betriebssystem nicht mehr erfolgreich gestartet werden kann, beispielsweise weil ein Benutzer Programme oder Daten des Computersystem schon ganz oder teilweise gelöscht hat.

### Bezugszeichenliste

- 1: Massenspeichersystem
- 2: Systempartition
- 3: Datenpartition
- 4: Systemfirmware
- 5: Firmwareschnittstelle
- 6: Betriebssystem
- 7: erste Firmwarekomponente (Boot-Loader)
- 8: zweite Firmwarekomponente (Treibermodul)
- 9: dritte Firmwarekomponente (Shell-Anwendung)
- 10: vierte Firmwarekomponente (Benutzerschnittstelle)
- 11: Dienstprogramm

- 20: Verfahren
- 21 bis 27: Verfahrensschritte

## Patentansprüche

1. Verfahren (20) zum sicheren Löschen von Daten von einem Computersystem mit wenigstens einem Massenspeichersystem (1), umfassend:
- Anfordern der Löschung und Festlegen eines vorbestimmten Teils des Massenspeichersystems (1) durch ein Dienstprogramm (11), das innerhalb eines Betriebssystems (6) des Computersystems ausgeführt wird;
- Übermitteln der Anforderung der Löschung und des festgelegten Teils über eine Firmwareschnittstelle (5) an eine Firmwarekomponente (9);
- Neustart des Computersystems zum Ausführen einer Systemfirmware (4);
- Ausführen der Systemfirmware (4) des Computersystems;
- Laden der Firmwarekomponente (9) mit Programmcode zum sicheren Löschen von Daten durch die Systemfirmware (4);
und
- Löschen des über die Firmwareschnittstelle (5) übermittelten Teils des Massenspeichersystems (1) durch Ausführen des Programmcodes innerhalb der Systemfirmware (4), unabhängig von dem Betriebssystem (6) des Computersystems.

2. Firmwarekomponente (9) für ein Computersystem mit einem Massenspeichersystem (1) sowie wenigstens einem nichtflüchtigen Speicher zum Speichern einer Systemfirmware (4), die beim Start des Computersystems ausgeführt wird, **gekennzeichnet durch**
in der Firmwarekomponente (9) enthaltenen Programmcode,
der dazu eingerichtet ist, beim Ausführen einen zu löschenden Teil des Massenspeichersystems (1) unabhängig von einem Betriebssystem (6) des Computersystems zu löschen, wobei die Systemfirmware (4) und/oder die Firmwarekomponente (9) eine Firmwareschnittstelle (5) zum Festlegen des zu löschenden Teils des Massenspeichersystems (1) **durch** ein Dienstprogramm (11) bereitstellt, das innerhalb des Betriebssystems (6) des Computersystems ausgeführt wird.

3. Firmwarekomponente (9) nach Anspruch 2,
**dadurch gekennzeichnet, dass**
die Firmwarekomponente (9) als plattformintegriertes Firmwaremodul in die Systemfirmware (4), insbesondere als Treiber oder Shell-Anwendung in eine Systemfirmware gemäß dem Universal Extensible Firmware Interface Standard, integrierbar ist.

4. Firmwarekomponente (9) nach Anspruch 2 oder 3,
**dadurch gekennzeichnet, dass**
der Programmcode dazu eingerichtet ist, den Inhalt des gesamten Massenspeichersystems (1) auf Aufforderung eines Benutzers des Computersystems zu löschen.

5. Firmwarekomponente (9) nach einem der Ansprüche 2 bis 4, **dadurch gekennzeichnet, dass**
der Programmcode zusätzlich zum Festlegen des zu löschenden Teils des Massenspeichersystems (1) durch eine Benutzerschnittstelle eingerichtet ist.

6. Firmwarekomponente (9) nach einem der Ansprüche 2 bis 5, **dadurch gekennzeichnet, dass**
der Programmcode wenigstens einen Algorithmus zum sicheren Löschen von nichtflüchtigen Speichermedien umfasst.

## Claims

1. Method (20) for securely deleting data from a computer system having at least one mass memory system (1), comprising:
- requesting the deletion and stipulating a predetermined part of the mass memory system (1) by means of a utility program (11) which is executed inside an operating system (6) of the computer system;
- transmitting the deletion request and the stipulated part to a firmware component (9) via a firmware interface (5);
- restarting the computer system in order to execute a system firmware (4);
- executing the system firmware (4) of the computer system;
- loading the firmware component (9) having program code for securely deleting data by means of the system firmware (4); and
- deleting that part of the mass memory system (1) which is transmitted via the firmware interface (5) by executing the program code inside the system firmware (4) independently of the operating system (6) of the computer system.

2. Firmware component (9) for a computer system having a mass memory system (1) and at least one non-volatile memory for storing a system firmware (4) which is executed when starting the computer system, **characterized by**
program code which is contained in the firmware component (9) and is set up, upon execution, to delete a part of the mass memory system (1) to be deleted independently of an operating system (6) of the computer system, the system firmware (4) and/or the firmware component (9) providing a firmware interface (5) for stipulating that part of the mass memory system (1) which is to be deleted by means of a utility program (11) which is executed inside the operating system (6) of the computer system.

3. Firmware component (9) according to Claim 2, **characterized in that**
the firmware component (9) can be integrated as a platform-integrated firmware module in the system firmware (4), in particular as a driver or shell application in system firmware according to the universal extensible firmware interface standard.

4. Firmware component (9) according to Claim 2 or 3, **characterized in that**
the program code is set up to delete the contents of the entire mass memory system (1) upon request of a user of the computer system.

5. Firmware component (9) according to one of Claims 2 to 4,
**characterized in that**
the program code is additionally set up to stipulate that part of the mass memory system (1) which is to be deleted by means of a user interface.

6. Firmware component (9) according to one of Claims 2 to 5,
**characterized in that**
the program code comprises at least one algorithm for securely deleting non-volatile storage media.

## Revendications

1. Procédé (20) pour l'effacement sécurisé de données d'un système informatique comportant au moins un système de stockage de masse (1), consistant à :
- demander l'effacement et la détermination d'une partie prédéterminée du système de stockage de masse (1) au moyen d'un utilitaire (11) qui est exécuté dans un système d'exploitation (6) du système informatique ;
- transmettre la demande d'effacement de la partie déterminée via une interface de microprogramme (5) à un composant de microprogramme (9) ;
- redémarrer le système informatique pour exécuter un microprogramme système (4) ;
- exécuter le microprogramme système (4) du système informatique ;
- charger le composant de microprogramme (9) avec le code de programme pour l'effacement sécurisé des données au moyen du microprogramme système (4) ;
- effacer la partie du système de stockage de masse (1) transmise par l'intermédiaire de l'interface de microprogramme (5) par exécution du code de programme dans le système de microprogramme (4), indépendamment du système d'exploitation (6) du système informatique.

2. Composant de microprogramme (9) destiné à un système informatique comportant un système de stockage de masse (1) et au moins une mémoire non volatile pour stocker un microprogramme système (4) qui est exécuté au démarrage du système informatique, **caractérisé par** un code de programme contenant des composants de microprogramme (9), qui est conçu, lors de son exécution, pour effacer une partie à effacer du système de stockage de masse (1) indépendamment d'un système d'exploitation (6) du système informatique, dans lequel le microprogramme système (4) et/ou le composant de microprogramme (9) fournit/fournissent une interface de microprogramme (5) destinée à déterminer la partie à effacer du système de stockage de masse (1), au moyen d'un utilitaire (11) qui est exécuté dans le système d'exploitation (6) du système informatique.

3. Composant de microprogramme (9) selon la revendication 2,
**caractérisé en ce que**
le composant de microprogramme (9) est intégrable en tant que module de microprogramme intégré à la plateforme dans le microprogramme système (4), notamment sous la forme d'une application du type pilote ou interpréteur de commande dans un microprogramme système conforme à la norme Universal Extensible Firmware Interface Standard (norme d'interface de microprogramme extensible universel).

4. Composant de microprogramme (9) selon la revendication 2 ou 3,
**caractérisé en ce que**
le code de programme est conçu pour effacer le contenu de la totalité du système de stockage de masse (1) à la demande d'un utilisateur du système informatique.

5. Composant de microprogramme (9) selon l'une quelconque des revendications 2 à 4,
**caractérisé en ce que**
le code de programme est conçu pour déterminer la partie à effacer du système de stockage de masse (1) au moyen d'une interface utilisateur.

6. Composant de microprogramme (9) selon l'une quelconque des revendications 2 à 5,
**caractérisé en ce que**
le code de programme comprend au moins un algorithme destiné à effacer des supports de stockage non volatils.
